# EUROPÄISCHE PATENTSCHRIFT

(11) **EP 1 713 364 B1**
(45) Veröffentlichungstag und Bekanntmachung des Hinweises auf die Patenterteilung: **30.06.2010**
(21) Anmeldenummer: 05707877.6
(22) Anmeldetag: 28.01.2005
(51) Int. Cl.: A47J 31/54

(54) **KAFFEEMASCHINE MIT DURCHLAUFERHITZER**
COFFEE MACHINE WITH A CONTINUOUS FLOW HEATER
MACHINE A CAFE POURVUE D'UN CHAUFFE-EAU INSTANTANE

(30) Priorität: 30.01.2004 DE 102004004815
(43) Veröffentlichungstag der Anmeldung: 25.10.2006
(73) Patentinhaber: Eichenauer Heizelemente GmbH & Co. KG, 76770 Hatzenbühl (DE)
(72) Erfinder: HÖFER, Edwin, 76756 Bellheim (DE); MAGG, Johann, 83368 St. Georgen (DE); MAYR, Andreas, 83254 Breitbrunn (DE)
(74) Vertreter: Lempert, Jost
(86) Internationale Anmeldenummer: PCT/EP2005/050361
(87) Internationale Veröffentlichungsnummer: WO 2005/072587

(56) Entgegenhaltungen:
- DE-A1- 2 348 336
- DE-A1- 19 706 120
- DE-U1- 9 301 729
- US-A1- 2003 066 431

## Beschreibung

Die Erfindung betrifft eine Kaffeemaschine nach dem Oberbegriff des Anspruchs 1.

Kaffeemaschinen des Standes der Technik arbeiten nach unterschiedlichen Prinzipien. Die gängigsten Modelle sind die sogenannten drucklos arbeitenden Kaffeemaschinen. Bei diesen fließt Wasser aus einem Vorratsbehälter in ein elektrisch beheizbares Rohr. Insbesondere durch Dampfentwicklung in diesem Rohr wird erwärmtes Wasser dann durch eine Steigleitung zu einem Auslauf gedrückt, über welchen das erwärmte Wasser dann in einen Kaffeefilter tropft. Aus diesem Kaffeefilter kann der Filterkaffee bei atmosphärischem Druck dann in eine Kanne fließen.

Im Gegensatz hierzu liegt bei Espressomaschinen ein erhöhter Druck im Bereich des Kaffeemehls vor, beispielsweise 15 bar. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen elektrisch beheizbaren Bereich einer Kaffeemehlaufnahmeeinrichtung zuführt.

Diese Kaffeemehlaufnahmeeinrichtung umfasst im Allgemeinen ein Sieb zur Aufnahme des Kaffees. Zur Erzeugung des hohen Drucks im Bereich des Kaffees ist die Kaffeemehlaufnahmeeinrichtung während des Betriebs in einem gegen die Atmosphäre abgedichteten Bereich angeordnet, der als Druckraum oder Brühkammer bezeichnet werden kann.

Bei einer weiteren prinzipiell anders arbeitenden Kaffeemaschine ist vorgesehen, das Wasser zur Zubereitung des Kaffees zunächst aus einem Wasserbehälter in einen beheizbaren Zwischenbehälter zu überführen. Von diesem Zwischenbehälter gelangt das erwärmte Wasser zu einer elektromotorisch angetriebenen Pumpe, von der es unter erhöhtem Druck, beispielsweise 2 bis 3 bar, einer Kaffeemehlaufnahmeeinrichtung zugeführt wird. Dabei ist vorgesehen, dass der Kaffee, anders als bei der Espressomaschine, nicht in loser Form als Kaffeemehl in die Kaffeemehlaufnahmeeinrichtung eingebracht wird, sondern in Form eines Kaffeepads, das heißt in verdichteter Form mit Filterpapier umgeben, in einen Halter eingelegt wird. Der Halter kann mit einer Halterabdeckung, über die Wasser zugeführt wird, einen abgedichteten Druckraum bilden. Dem Halter für die Kaffeepads kommen dabei mehrere Funktionen zu. Zum einen stellt der Halter eine Dichtfläche bereit, so dass eine Druckkammer gebildet werden kann. Weiterhin hat der Halter eine Auslassöffnung, aus der der Kaffee austreten kann. Ferner soll der Kaffeepad in einer Weise in dem Halter gelagert sein, so dass das Durchströmen des Kaffeepads nicht behindert wird. Eine derartige Kaffeemaschine nimmt eine Zwischenstellung zwischen einer herkömmlichen drucklosen Kaffeemaschine und einer Espressomaschine ein.

Insbesondere im Zusammenhang mit Kaffeemaschinen, die auf der Grundlage von Kaffeepads Kaffee zubereiten, kann das von der Pumpe beförderte Wasser in einem Durchlauferhitzer erwärmt werden. Die WO 03/030696 A1 beschreibt eine solche Kaffeemaschine. Der Durchlauferhitzer umfasst dabei ein Rohrstück, das von in Aluminiumguss eingebetteten Heizelementen teilweise umschlossen ist. Diese gesamte Anordnung mit weiteren Komponenten ist von einem Gehäuse umgeben, mit dem der Durchlauferhitzer in das Kaffeemaschinengehäuse eingesetzt wird. Eine solche Lösung ist aufwändig und daher mit hohen Kosten verbunden.

Die DE 197 06 120 A1 zeigt eine Kaffeemaschine mit einem zweiteiligen Bodenbereich aus einem Trägerteil und einem mit diesem über ein Filmscharnier verbundenen Bodenteil. Beide bilden zusammen mit weiteren Elementen, nämlich einem gebogenen Rohr eine Durchlauferhitzer-Baugruppe für die Kaffeemaschine. Das Durchlauferhitzerrohr wird über Schlauchstücke unmittelbar am Tankgehäuse ausgeformte bzw. mit diesem verbundene Wasserzu- und -ablaufstutzen verbunden. Zur Befestigung wird das Bodenteil mittels zweier Befestigungsrippen in das das Trägerteil aufweisende Gehäuse eingehängt und in dieses geschwenkt, um dann mittels Rasthaken in Gehäuseöffnungen verrastet zu werden. Hierdurch wird der Durchlauferhitzer zwischen Trägerteil und Bodenteil eingespannt und derart zwischen beiden gehalten.

Dies erfordert eine zweiteilige Ausbildung des Bodenbereichs mit einem Trägerteil und einem gegen dieses in der beschriebenen Weise verspannbaren Bodenteils sowie den genannten komplizierten Befestigungs- bzw. Spannmitteln. Demgegenüber liegt der Erfindung die Aufgabe zugrunde, wie bei einfacher Ausgestaltung kostengünstig gefertigt werden kann und insbesondere im Hinblick auf die Montage des Durchlauferhitzers oder sonstiger Komponenten im Gehäuse verbessert ist.

Erfindungsgemäß wird die genannte Aufgabe bei einer Kaffeemaschine der eingangs genannten durch die kennzeichnenden Merkmale des Anspruchs 1 gelöst.

Die Erfindung baut auf der gattungsgemäßen Kaffeemaschine dadurch auf, dass mindestens ein Schlauchanschlussstutzen in ein Ende des Rohres des Durchlauferhitzers eingesteckt ist und als solcher Befestigungsmittel zur Befestigung des Durchlauferhitzers im Gehäuse der Kaffeemaschine aufweist. Derartige Schlauchanschlussstutzen können innen- bzw. außendichtend sein, und sie stellen eine einfache Möglichkeit zur Verfügung, einen Schlauch zur Zuführung bzw. Ableitung von Wasser aufzustecken.

Nützlicherweise ist vorgesehen, dass der mindestens eine Schlauchanschlussstutzen aus Kunststoff, insbesondere aus hochtemperaturfestem Kunststoff hergestellt ist. Ein hitzebeständiger Kunststoff stellt eine gute Wärmeisolierung zwischen dem Durchlauferhitzer und dem Gehäuse bzw. den Schläuchen zur Verfügung.

Weiterhin lassen sich an Schlauchanschlussstutzen aus Kunststoff in einfacher Weise Befestigungsmittel anformen, die den Durchlauferhitzer im Gehäuse zentrieren und die Möglichkeit bieten, den Durchlauferhitzer zu befestigen.

Es ist bevorzugt, dass der mindestens eine Schlauchanschlussstutzen an einer Innenwand des Rohres anliegende Dichtmittel aufweist, durch die der mindestens eine Schlauchanschlussstutzen abgedichtet mit den Enden des Rohrs verbunden ist. Die Schlauchanschlussstutzen können somit ohne weitere Vorkehrungen am Rohr abdichtend mit diesem verbunden werden.

Vorzugsweise wird das Dichtmittel durch eine in eine Ringnut am Außenumfang des Schlauchanschlussstutzens eingelegte O-Ring Dichtung gebildet.

Zur Verbesserung der Dichtwirkung können mehrere axial beabstandete O-Ring Dichtungen am Schlauchanschlussstutzen vorgesehen sein.

Sowohl bei der Variante mit einem Dichtmittel bzw. einer O-Ring Dichtung als auch bei der Variante mit mehreren Dichtmitteln bzw. O-Ring Dichtungen wird neben der Dichtwirkung auch die Montage und der Sitz des Schlauchanschlussstutzens im Rohr verbessert.

Erfindungsgemäß ist vorgesehen, dass der mindestens eine Schlauchanschlussstutzen Befestigungsmittel aufweist.

Weiterhin ist in diesem Zusammenhang nützlicherweise vorgesehen, dass durch die Befestigungsmittel der Durchlauferhitzer im Gehäuse gehalten ist. Die Ausrichtung des Durchlauferhitzers im Gehäuse ist eine kritische Größe, da vermieden werden muss, dass das heiße Bauteil in zu großer Nähe zu sonstigen Gehäuseteilen oder sonstigen Komponenten angeordnet wird. Folglich ist es von Vorteil, dass an den Schlauchanschlüssen sogleich die richtigen Mittel zur Zentrierung des Durchlauferhitzers vorgesehen sind, wodurch eine Fehlausrichtung vermieden werden kann.

Weiterhin ist es besonders nützlich, dass die Befestigungsmittel Aufnahmen zur Integration zusätzlicher Bauelemente der Kaffeemaschine aufweisen. Da sich an den aus kunststoff bestehenden Schlauchanschlussstutzen in einfacher Weise Fortsätze oder Ähnliches anformen lassen, bietet sich die Gestaltung des Schlauchanschlussstutzen zur Anbringung weiterer Bauelemente an.

In diesem Zusammenhang ist es besonders vorteilhaft, dass als zusätzliches Baulement ein Sicherheitsventil, Temperaturfühler und/oder ein Reedschalter als Wasserstandsensor vorgesehen ist. Ein Sicherheitsventil kann beispielsweise in den oberen Schlauchanschlussstutzen des im Allgemeinen vertikal montierten Durchlauferhitzers integriert sein. Ein Reedschalter zur Erfassung des Wasserstands ist nützlicherweise am unteren Schlauchanschlussstutzen integriert.

Weiterhin kann die erfindungsgemäße Kaffeemaschine in der Weise nützlich ausgebildet sein, dass das Rohr des Durchlauferhitzers über mindestens eine ebene eine Kontaktfläche thermisch mit mindestens einem, vorzugsweise zwei Heizstäben verbunden ist. Ein derartiger Durchlauferhitzer kann besonders einfach gefertigt werden. Beispielsweise kann ein abgeflachtes Rohr eine ebene Kontaktfläche bereitstellen und durch einfaches Zusammendrücken eines Rohrbereichs zur Verfügung gestellt werden. Durch die Abflachungen werden große Flächen für den Wärmeübergang zwischen dem Rohr und einem abgeflachten Heizstab zur Verfügung ge stellt. Da keine Gussteile erforderlich sind, ist die Masse des Durchlauferhitzers vergleichsweise gering.

Vorzugsweise ist die erfindungsgemäße Kaffeemaschine so gestaltet, dass die Anordnung aus Rohr und Heizstäben durch eine Manschette zusammengehalten ist. Eine solche Manschette ist im Hinblick auf die Einfachheit der Fertigung einem aufwendigen Gehäuse vorzuziehen. Die Manschette kann aus hitzbeständigem Kunststoff oder aus Metall gefertigt sein.

Nützlicherweise ist vorgesehen, dass an der Manschette ein Temperaturfühler vorgesehen ist. Da die Manschette vorzugsweise in der Mitte des länglichen Durchlauferhitzers angeordnet ist, um so die Komponenten sicher zusammenzuhalten, ist sie an einem bevorzugten Ort für einen Temperaturfühler angeordnet. Insofern bietet es sich an, auch einen Temperaturfühler im Bereich der Manschette anzuordnen und diesen an der Manschette zu montieren.

Der Erfindung liegt die Erkenntnis zugrunde, dass ein Durchlauferhitzer in eine Kaffeemaschine in besonders kostengünstiger und zuverlässiger Weise montiert werden kann, indem Schlauchanschlussstutzen aus vorzugsweise hitzebeständigem Kunststoff verwendet werden, die gleichzeitig Befestigungsmittel sowohl für den Durchlauferhitzer am Gehäuse als auch für zusätzliche Komponenten der Kaffeemaschine zur Verfügung stellen.

Die Erfindung wird nun mit Bezug auf die begleitenden Zeichnungen anhand besonders bevorzugter Ausführungsformen beispielhaft erläutert. Dabei zeigt:

Figur 1 eine Schnittdarstellung einer Kaffeemaschine zur Erläuterung der Erfindung; und

Figur 2 eine perspektivische Darstellung eines Gehäuseteils sowie im Gehäuse angeordneter Bauteile zur Erläuterung der Erfindung; und

Figur 3 eine Explosionsdarstellung von Durchlauferhitzer, Schlauchanschlussstutzen und Aufnahmen.

Bei der nachfolgenden Beschreibung der Zeichnungen bezeichnen gleiche Bezugszeichen gleiche oder vergleichbare Komponenten.

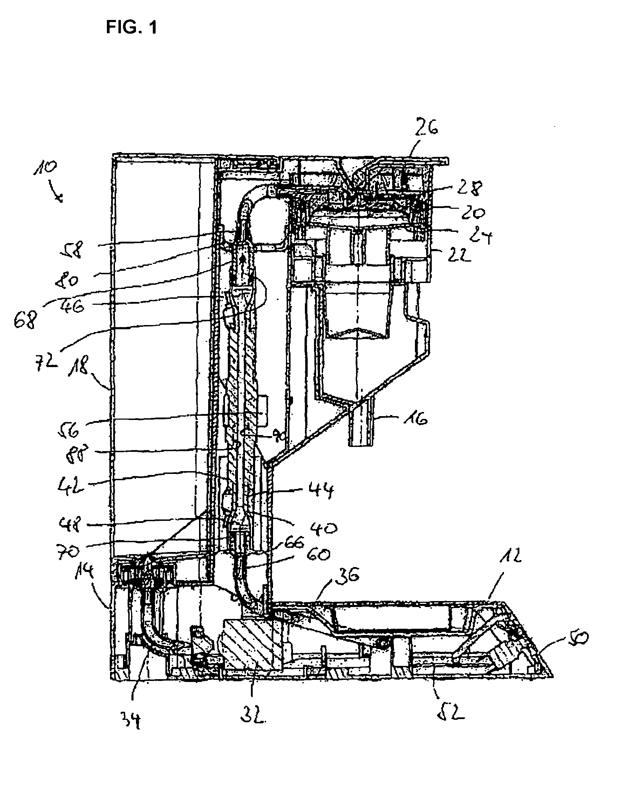

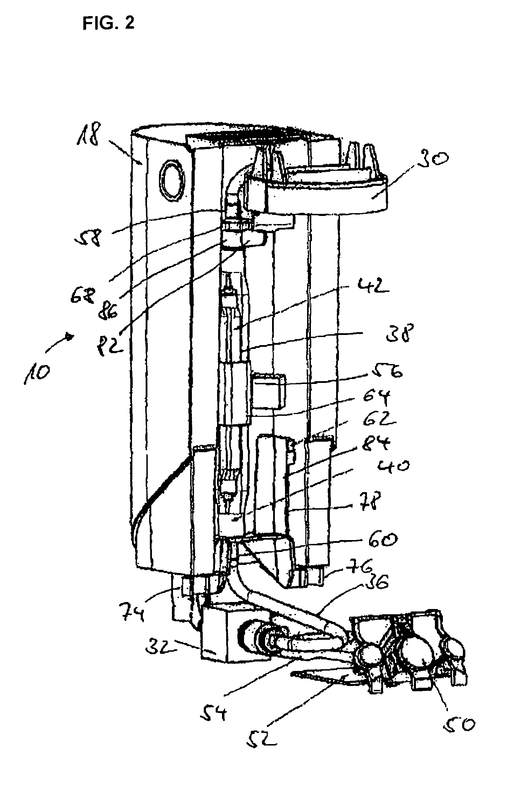

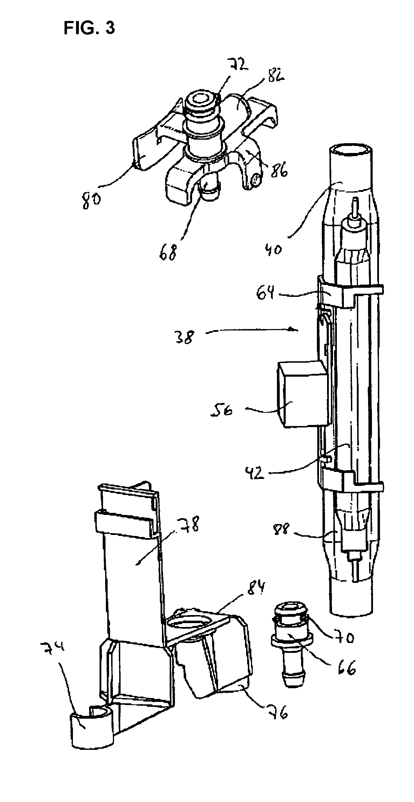

Figur 1 zeigt eine Schnittdarstellung einer Kaffeemaschine zur Erläuterung der Erfindung. Figur 2 zeigt eine perspektivische Darstellung eines Gehäuseteils sowie im Gehäuse angeordneter Bauteile zur Erläuterung der vorliegenden Erfindung. In Figur 3 sind Durchlauferhitzer 38, Schlauchanschlussstutzen 66, 68 und Aufnahmen 84, 86 in einer Explosionsdarstellung gezeigt. Die Kaffeemaschine 10 umfasst ein flaches Vorderteil 12 und eine säulenartige hintere Baugruppe 14. Auf dem Vorderteil 12 können Tassen zur Entnahme von Kaffee über einen Auslauf 16 angeordnet werden. In die hintere Baugruppe 14 ist ein Wasserbehälter 18 eingesetzt. Die hintere Baugruppe 14 umfasst weiterhin eine Brühkammer 20, die durch einen mit einer Schublade zuführbaren Kaffeepadhalter 24 und eine elastische Halterabdeckung 28 als Brühkammeroberteil 30 gebildet wird. Um den Kaffeepadhalter 24 und die Halterabdeckung 28 nach dem Einschieben der Schublade 22 gegeneinander abzudichten, ist ein Hebelmechanismus mit einem Hebel 26 vorgesehen. Im dargestellten Zustand zieht der Hebelmechanismus den Kaffeepadhalter 24 gegen die Halterabdeckung 28. Legt man den Hebel 26 um 90° nach hinten um, so wird der Kaffeepadhalter 24 abgesenkt, so dass er zusammen mit der Schublade 22 aus der Kaffeemaschine 10 entnehmbar ist.

Innerhalb des durch das Vorderteil 12 und die hintere Baugruppe 14 gebildeten Gehäuses sind Komponenten zur Förderung von Wasser, zur Erwärmung von Wasser und zur Steuerung dieser Vorgänge vorgesehen. Im unteren Gehäusebereich an der Grenze zwischen dem Vorderteil 12 und der hinteren Baugruppe 14 ist eine Pumpe 32 angeordnet, der über einen Schlauch 34 Wasser aus dem Wasserbehälter 18 zugeführt wird. Über einen weiteren Schlauch 36 ist die Pumpe 32 mit einem Durchlauferhitzer 38 verbunden. Wesentliche Komponenten dieses Durchlauferhitzers 38 sind ein der Wasserführung dienendes Rohr 40 sowie zwei Heizstäbe 42, 44. Diese Heizstäbe 42, 44 weisen jeweils zwei elektrische Anschlüsse 46, 48 auf, an die die Heizspannung angelegt wird. Am Vorderteil 12 der Kaffeemaschine 10 ist ein Tastenfeld 50 vorgesehen, das mit einer Elektronikplatine 52 verbunden ist, wobei die Elektronikplatine 52 vorzugsweise sämtliche Funktionen der Kaffeemaschine steuert, insbesondere die Funktionen im Hinblick auf die Förderung und die Erwärmung des Wassers. Ausgehend von der Elektronikplatine 52 ist eine Kabelführung 54 vorgesehen, in der die elektrischen Leitungen zusammengefasst sind, über die die elektronische Steuerung ihre Steuerbefehle ausgibt und Eingangsinformationen empfängt. Diese Eingangsinformationen betreffen insbesondere die von einem Temperaturfühler 56 erfasste Temperatur des Durchlauferhitzers sowie vorzugsweise weitere Temperaturinformationen, die von Temperaturfühlern an Messstellen 58, 60 in Strömungsrichtung hinter beziehungsweise vor dem Durchlauferhitzer 38 erfasst werden. In der hinteren Baugruppe 14 ist weiterhin ein Reedschalter 62 angeordnet. Aufgabe des Reedschalters 62 ist es, einen Mindestfüllstand im Wasserbehälter 18 elektrisch zu detektieren. Dazu ist im Wasserbehälter 18 ein Schwimmer vertikal verschieblich gelagert, der einen Magneten aufweist. Bei Unterschreiten einer Mindestfüllmenge im Wasserbehälter 18 befindet sich der Magnetschwimmer nahe des Reedschalters 62 und lässt diesen einschalten, wodurch ein Stromkreis geschlossen wird, der ein Signal über das Unterschreiten des Füllstandes an die elektronische Steuerung übergibt. Ist der Füllstand im Wasserbehälter geringer als die Mindestfüllmenge, kann die Kaffeemaschine nicht in Betrieb genommen werden. Der Durchlauferhitzer 38 kann weiterhin über einen Fühler verfügen, der ein Trockenlaufen während des Heizvorgangs verhindert.

Das Rohr 60 des Durchlauferhitzers 38 ist in dem Bereich, in dem die Heizstäbe 42, 44 an dem Rohr 60 anliegen, abgeflacht. Auf diese Weise werden Kontaktflächen 88, 90 vorzugsweise über die gesamte oder nahezu die gesamte Länge des Durchlauferhitzers 38 zur Verfügung gestellt, wobei eine beispielhafte radiale Position der Kontaktflächen 88, 90 in Fig. 1 durch unterbrochene Linien dargestellt ist. Bei entsprechender Auslegung der Heizstäbe mit ebenfalls einer flachen Seite kann so eine gute Anlage und folglich ein guter Wärmeübergang zwischen den Heizstäben 42, 44 und dem Rohr 60 erfolgen. Die Anordnung von Rohr 60 und Heizstäben 42, 44 wird durch eine Manschette 64 zusammengehalten, die aus wärmebeständigem Kunststoff oder Metall gefertigt sein kann. Im Bereich dieser Manschette 64 ist der Temperaturfühler 56 angeordnet. An den Enden des Rohrs 60 sind Schlauchanschlussstutzen 66, 68 angebracht. Diese sind im vorliegenden Ausführungsbeispiel in das Rohr 60 eingesteckt und mit einer umlaufenden Dichtung 70, 72, beispielsweise einem O-Ring, ausgestattet. An den aus hitzebeständigem Kunststoff gefertigten Schlauchanschlussstutzen 66, 68 sind Befestigungsmittel 74, 76, 78, 80 angeformt, wobei nur einige der Befestigungsmittel hier beispielhaft mit Bezugszeichen gekennzeichnet sind. Diese Befestigungsmittel 74, 76, 78, 80 dienen zur Befestigung und Zentrierung des Durchlauferhitzers 38 im Gehäuse und stellen weiterhin Aufnahmen für zusätzliche Komponenten zur Verfügung, beispielsweise eine Aufnahme 84 für den Reedschalter 62 in dem Befestigungsmittel 78. In den Schlauchanschlussstutzen 68 ist weiterhin eine Aufnahme 86 für ein Sicherheitsventil 82 integriert. Der Durchlauferhitzer 38 kann somit zusammen mit den Schlauchanschlussstutzen 66, 68 und den aufgesteckten Schläuchen komplett montiert werden und ohne weiteres aufgrund der zentrierenden Eigenschaften in das Gehäuse eingesetzt werden.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

**Bezugszeichenliste**
- 10: Kaffeemaschine
- 12: Vorderteil
- 14: hintere Baugruppe
- 16: Auslauf
- 18: Wasserbehälter
- 20: Brühkammer
- 22: Schublade
- 24: Kaffeepadhalter
- 26: Hebel
- 28: Halterabdeckung
- 30: Brühkammeroberteil
- 32: Pumpe
- 34: Schlauch
- 36: Schlauch
- 38: Durchlauferhitzer
- 40: Rohr
- 42: Heizstab
- 44: Heizstab
- 46: elektrischer Anschluss
- 48: elektrischer Anschluss
- 50: Tastenfeld
- 52: Elektronikplatine
- 54: Kabelführung
- 56: Temperaturfühler
- 58: Messstelle
- 60: Messstelle
- 62: Reedschalter
- 64: Manschette
- 66: Schlauchanschlussstutzen
- 68: Schlauchanschlussstutzen
- 70: Dichtung
- 72: Dichtung
- 74: Befestigungsmittel

- 76: Befestigungsmittel
- 78: Befestigungsmittel
- 80: Befestigungsmittel
- 82: Sicherheitsventil
- 84: Aufnahme
- 86: Aufnahme
- 88: Kontaktfläche
- 90: Kontaktfläche

## Patentansprüche

1. Kaffeemaschine zur Kaffeezubereitung, insbesondere auf der Grundlage von Kaffeepads, die einen in einem Gehäuse befestigten Durchlauferhitzer (38) mit einem Rohr (40) zur Wasserführung aufweist, **dadurch gekennzeichnet, dass** in mindestens ein Ende des Rohrs (40) ein Schlauchanschlussstutzen (66, 68) eingesteckt ist, der Befestigungsmittel (74,76, 78,80) zur Befestigung des Durchlauferhitzers (38) im Gehäuse aufweist.

2. Kaffeemaschine nach Anspruch 1, **dadurch gekennzeichnet, dass** der mindestens eine Schlauchanschlussstutzen (66, 68) aus Kunststoff, insbesondere aus hochtemperaturfestem Kunststoff hergestellt ist.

3. Kaffeemaschine nach Anspruch 1 oder 2, **dadurch gekennzeichnet, dass** der mindestens eine Schlauchanschlussstutzen (66, 68) an einer Innenwand des Rohres (40) anliegende Dichtmittel (70, 72) aufweist, durch die der mindestens eine Schlauchanschlussstutzen (66, 68) abgedichtet mit den Enden des Rohrs (40) verbunden ist.

4. Kaffeemaschine nach Anspruch 3, **dadurch gekennzeichnet, dass** das Dichtmittel (70, 72) durch eine in eine Ringnut am Außenumfang des Schlauchanschlussstutzens (66, 68) eingelegte O-Ring Dichtung gebildet wird.

5. Kaffeemaschine nach Anspruch 4, **dadurch gekennzeichnet, dass** mehrere axial beabstandete O-Ring Dichtungen (70, 72) am Schlauchanschlussstutzen (66, 68) vorgesehen sind.

6. Kaffeemaschine nach einem der vorangehenden Ansprüche, **dadurch gekennzeichnet, dass** die Befestigungsmittel (74,76, 78,80) Aufnahmen (84, 86) zur Integration zusätzlicher Bauelemente der Kaffeemaschine aufweisen.

7. Kaffeemaschine nach Anspruch 6, **dadurch gekennzeichnet, dass** als zusätzliches Bauelement ein Sicherheitsventil (82), Temperaturfühler und/oder ein Reedschalter (62) als Wasserstandsensor vorgesehen ist.

8. Kaffeemaschine nach einem der vorangehenden Ansprüche, **dadurch gekennzeichnet, dass** das Rohr (40) des Durchlauferhitzers (38) über mindestens eine ebene Kontaktfläche (88,90) thermisch mit mindestens einem, vorzugsweise zwei Heizstäben (42,44) verbunden ist.

9. Kaffeemaschine nach Anspruch 8, **dadurch gekennzeichnet, dass** die Anordnung aus Rohr (40) und Heizstäben (42,44) durch eine Manschette (64) zusammengehalten ist.

10. Kaffeemaschine nach Anspruch 10, **dadurch gekennzeichnet, dass** an der Manschette (64) ein Temperaturfühler (56) vorgesehen ist.

## Claims

1. A coffee machine for preparing coffee, in particular on the basis of coffee pods, which comprises an instantaneous water heater (38) which is mounted in a housing and has a pipe (40) for conveying water, **characterised in that** a hose nipple (66, 68) is inserted into at least one end of the pipe (40), which hose nipple comprises fastening means (74,76, 78,80) for fastening the Instantaneous water heater (38) in the housing.

2. A coffee machine according to claim 1, **characterised in that** the at least one hose nipple (66, 68) is made of plastics, in particular of high temperature-resistant plastics.

3. A coffee machine according to claim 1 or claim 2, **characterised in that** the at least one hose nipple (66, 68) comprises sealing means (70, 72) resting against an internal wall of the pipe (40), by which sealing means the at least one hose nipple (66, 68) is connected in sealed manner with the ends of the pipe (40).

4. A coffee machine according to claim 3, **characterised in that** the sealing means (70, 72) is formed by an O-ring seal inserted into an annular groove at the outer circumference of the hose nipple (66, 68).

5. A coffee machine according to claim 4, **characterised in that** a plurality of axially spaced O-ring seals (70, 72) are provided on the hose nipple (66, 68).

6. A coffee machine according to any one of the preceding claims, **characterised in that** the fastening means (74,76, 78,80) comprise receptacles (84, 86) for the incorporation of additional components of the coffee machine.

7. A coffee machine according to claim 6, **characterised in that** there is provided as additional component a safety valve (82), a temperature sensor and/or a reed switch (62) acting as a water level sensor.

8. A coffee machine according to any one of the preceding claims, **characterised in that** the pipe (40) of the instantaneous water heater (38) is connected thermally with at least one, preferably two heating elements (42, 44) via at least one planar contact face (88, 90).

9. A coffee machine according to claim 8, **characterised in that** the arrangement of pipe (40) and heating elements (42, 44) is held together by a sleeve (64).

10. A coffee machine according to claim 9, **characterised in that** a temperature sensor (56) is provided on the sleeve (64).

## Revendications

1. Machine à café pour préparer le café, notamment sur le principe de dosettes de café, qui comporte un chauffe-eau instantané (38) fixé dans un boîtier avec un tuyau (40) pour guider l'eau, **caractérisée en ce qu'**une tubulure de raccordement flexible (66, 68) est insérée dans au moins une extrémité du tuyau (40), ladite tubulure comportant des moyens de fixation (74, 76, 78, 80) pour fixer le chauffe-eau instantané (38) dans le boîtier.

2. Machine à café selon la revendication 1, **caractérisée en ce que** l'au moins une tubulure de raccordement flexible (66, 68) est fabriquée en matière synthétique, notamment en matière synthétique résistant à des températures élevées.

3. Machine à café selon la revendication 1 ou 2, **caractérisée en ce que** l'au moins une tubulure de raccordement flexible (66, 68) comporte au niveau d'une paroi intérieure du tuyau (40) des moyens d'étanchéité (70, 72) plaqués à travers lesquels l'au moins une tubulure de raccordement flexible (66, 68) est reliée de façon étanche aux extrémités du tuyau (40).

4. Machine à café selon la revendication 3, **caractérisée en ce que** les moyens d'étanchéité (70, 72) sont formés à travers un joint torique placé dans une rainure annulaire au niveau du périmètre extérieur de la tubulure de raccordement flexible (66, 68).

5. Machine à café selon la revendication 4, **caractérisée en ce que** plusieurs joints toriques (70, 72) espacés dans le plan axial sont prévus au niveau de la tubulure de raccordement flexible (66, 68).

6. Machine à café selon l'une quelconque des revendications précédentes, **caractérisée en ce que** les moyens de fixation (74, 76, 78, 80) comportent des logements (84, 86) permettant d'intégrer des éléments fonctionnels supplémentaires de la machine à café.

7. Machine à café selon la revendication 6, **caractérisée en ce que** les éléments fonctionnels supplémentaires prévus sont une vanne de sécurité (82), un capteur de température et/ou un interrupteur à lames (62) servant de capteur de niveau d'eau.

8. Machine à café selon l'une quelconque des revendications précédentes, **caractérisée en ce que** le tuyau (40) du chauffe-eau instantané (38) est relié thermiquement à au moins une, de préférence deux tiges chauffantes (42, 44), via au moins une surface de contact plane (88, 90).

9. Machine à café selon la revendication 8, **caractérisée en ce que** l'agencement composé du tuyau (40) et des tiges chauffantes (42, 44) est maintenu ensemble par un manchon (64).

10. Machine à café selon la revendication 9, **caractérisée en ce qu'**un capteur de température (56) est prévu au niveau du manchon (64).
